(19) **Europäisches Patentamt**

**European Patent Office**

**Office européen des brevets**

(11) **EP 1 087 237 A2**

(12) **EUROPÄISCHE PATENTANMELDUNG**

(43) Veröffentlichungstag:
**28.03.2001 Patentblatt 2001/13**

(51) Int. Cl.⁷: $G01S\ 13/82$, $G01S\ 13/87$, $G01S\ 13/88$, $B66C\ 13/46$

(21) Anmeldenummer: **00121039.2**

(22) Anmeldetag: **27.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.09.1999 DE 19946204**

(71) Anmelder:
**SIEMENS AKTIENGESELLSCHAFT
80333 München (DE)**

(72) Erfinder:
- **Doemens, Günter, Dr.
  83607 Holzkirchen (DE)**
- **Heide, Patric, Dr.
  85579 Neubiberg (DE)**
- **Hoogenboom, Ed
  2371 CZ Roelofaemdsveen (NL)**
- **Wekken van der, Reitse
  2595 EV Den Haag (NL)**
- **Vossiek, Martin, Dr.
  80789 München (DE)**

(54) **Messeinrichtung zur Positionsbestimmung von Lastaufnahmemitteln bei Hebezeugen**

(57) Eine Meßeinrichtung dient zur Positionsbestimmung von Lastaufnahmemitteln (16) bei Hebezeugen (15). Um eine derartige Meßeinrichtung gegen Staubwolken, Nebel, Ablagerungen etc. weniger störanfällig zu machen, wird die Meßeinrichtung als Mikrowellenmeßanlage (1) ausgebildet.

Fig. 6

EP 1 087 237 A2

**Beschreibung**

Die Erfindung bezieht sich auf eine Meßeinrichtung zur Positionsbestimmung von Lastaufnahmemitteln bei Hebezeugen.

Derartige Meßeinrichtungen kommen mit zunehmender Verbreitung insbesondere bei Containerkränen zum Einsatz, mittels denen eine sichere Aufnahme, ein sicherer Transport und ein sicheres und zielgenaues Absetzen eines Containers bewerkstelligt werden muß. Um die genannten Vorgänge störungsfrei durchführen zu können und um diese Vorgänge automatisieren zu können ist es erforderlich, daß in einer Steuerung des Hebezeugs exakte Informationen hinsichtlich der genauen Positionierung des Lastaufnahmemittels bzw. des von diesem gehaltenen Containers in bezug auf den Containerkran bzw. dessen Krankatze vorliegen.

Bekannte entsprechende Meßeinrichturigen sind insoweit störanfällig, als in Hafengebieten vergleichsweise häufig auftretender Nebel, Regen, Staubwolken oder vergleichbare Erscheinungen zu einer erheblichen Beeinträchtigung hinsichtlich der Meßgenauigkeit führen.

Der Erfindung liegt die Aufgabe zugrunde, die eingangs erwähnte Meßeinrichtung zur Positionsbestimmung von Lastaufnahmemitteln bei Hebezeugen derart weiterzubilden, daß ihre Funktionsfähigkeit auch bei den genannten erschwerten Verhaltnissen zuverlässig gewährleistet bleibt.

Diese Aufgabe wird erfindungsgemäß dadurch gelöst, daß die Meßeinrichtung als Mikrowellenmeßanlage ausgebildet ist. Aufgrund dieser Ausgestaltung der Meßeinrichtung kann auch bei nachteiligen Umgebungsverhältnissen bzw. -einflüssen, wie Nebei, Regel, Schnee, Staubwolken etc., die Meßgenauigkeit der Meßeinrichtung dennoch sichergestellt werden.

Als besonders vorteilhaft hat sich die Ausgestaltung der Meßeinrichtung als Radaranlage erwiesen.

Eine derartige Radaranlage weist vorteilhaft zumindest einen Radarsensor und zumindest eine aktive Reflektoreinheit auf. Je nach Anforderungen an die Erfassung der räumlichen Bewegung des Lastaufnahmemittels bzw. eines daran angebrachten Containers kann eine solche Radaranlage die jeweils gewunschte Anzahl von Radarsensoren bzw. aktiven Reflektoreinheiten aufweisen, wobei wahlweise die Anzahl der Radarsensoren oder die Anzahl der aktiven Reflektoreinheiten oder die Anzahl sowohl der Radarsensoren als auch der aktiven Reflektoreinheiten verändert werden kann.

Zweckmäßigerweise weist der Radarsensor ein Radarmodul mit einem Oszillator zur Signalerzeugung und einen Prozessor zur Steuerung und Auswertung der Radarsignale auf.

Der Oszillator des Radarmoduls ist vorteilhafterweise in seiner Frequenz einstellbar.

Gemäß einer vorteilhaften Ausführungsform der Erfindung weist der Radarsensor eine Antenne auf, mittels der das Radarsignal mit der durch den Oszillator bestimmten Frequenz in Richtung auf die aktive Reflektoreinheit abstrahlbar ist.

Zur Auswertung sollte der Radarsensor vorteilhaft eine Einrichtung aufweisen, mittels der die Phasendifferenz zwischen dem zur aktiven Reflektoreinheit abgestrahlten und dem von der aktiven Reflektoreinheit reflektierten Radarsignal erfaßbar ist.

Die radarsensorseitige Einrichtung zur Erfassung der Phasendifferenz zwischen dem abgestrahlten und dem empfangenen Radarsignal kann einen Mischer und einen Filter aufweisen.

Zweckmäßigerweise hat die aktive Reflektoreinheit eine Empfangsantenne, mittels der vorn Radarsensor abgestrahlte Radarsignale empfangbar sind.

Des weiteren hat die aktive Reflektoreinheit einen Verstärker zur Verstärkung eines vom Radarsensor abgestrahlten und von ihr empfangenen Radarsgnals.

Zur Kennzeichnung der jeweiligen aktiven Reflektoreinheit ist es vorteilhaft, wenn jede aktive Reflektoreinheit einen Modulator aufweist, mittels dem das von ihr empfangene Radarsignal modulierbar ist, bevor es von der betreffenden aktiven Reflektoreinheit zum Radarsensor reflektiert wird. Zur Rückabstrahlung hat die aktive Reflektoreinheit vorteilhaft eine Sendeantenne, mittels der das im Modulator der aktiven Reflektoreinheit modulierte Radarsignal zurück zum Radarsensor abstrahlbar ist.

Anstelle einer separaten Sende- und einer separaten Empfangsantenne kann die aktive Reflektoreinheit eine kombinierte Sende- und Empfangsantenne aufweisen, wenn sie einen Richtkoppler, z.B. einen Zirkulator, aufweist.

Zweckmäßigerweise moduliert der Modulator jeder aktiven Reflektoreinheit das von ihr empfangene Radarsignal in einer für die betreffende aktive Reflektoreinheit charakteristischen Weise, so daß das derart moduliert und an den Radarsensor reflektierte Radarsignal vom Radarsensor der betreffenden aktiven Reflektoreinheit zugeordnet werden kann.

Die Modulation des reflektierten Radarsignals kann erfolgen, indem die Verstärkung des Verstärkers der aktiven Reflektoreinheit während der Reflexion der Radarsignals verändert wird.

Anstelle der Veränderung der Verstärkung ist es alternativ möglich, daß der Verstärker der aktiven Reflektoreinheit während der Reflexion des Radarsignals ein- und ausgeschaltet wird.

Darüber hinaus kann das von der aktiven Reflektoreinheit zum Radarsensor reflektierte Radarsignal auch dadurch in der gewünschten Weise moduliert werden, daß die aktive Reflektoreinheit ein Mittel zur zeitlichen Verzögerung des von ihr zum Radarsensor zu reflektierenden Radarsignals aufweist.

Das reflektoreinheitsseitige Mittel zur zeitlichen Verzögerung des zu reflektierenden Radarsignals kann vorteilhaft als Laufzeitglied ausgebildet sein, mittels dem das zu reflektierende Radarsignal um einen definierten Zeitversatz verzögerbar ist.

Vorteilhaft kann das Mittel zur zeitlichen Verzögerung des zu reflektierenden Radarsignals als Oberflächenelement ausgebildet sein.

Gemäß einer zweckmäßigen Weiterbildung ist auf einem Substrat, auf dem eine Laufzeitstrecke des Laufzeitglieds ausgebildet ist, eine Resonatorstruktur aufgebracht, aus der die Modulationsfrequenz ableitbar ist. Durch die Aufbringung auf demselben Substrat sind die zeitliche Verzögerung und die Modulationsfrequenz aus technisch-physikalischen Gründen miteinander verkoppelt.

Des weiteren kann die Modulation des von der aktiven Reflektoreinheit zum Radarsensor zu reflektierenden Radarsignals dadurch bewerkstelligt werden, daß die aktive Reflektoreinheit ein Mittel zur Frequenzversetzung des zu reflektierenden Radarsignals aufweist.

Das reflektoreinheitsseitige Mittel zur Frequenzversetzung kann vorteilhaft als Mischerbaustein ausgebildet sein, mittels dem das von der aktiven Reflektoreinheit empfangene Radarsignal mit einem Referenzsignal freguenzmischbar ist.

Der reflektoreinheitsseitige Mischerbaustein ist zweckmäßigerweise als Zweiseitenband- bzw. Einseitenbandmischer ausgebildet.

Die Modulation des von der aktiven Reflektoreinheit zum Radarsensor zu reflektierenden Radarsignals kann des weiteren dadurch erreicht werden, daß die aktive Reflektoreinheit ein Mittel zur alternierenden Phasenveränderung des zu reflektierenden Radarsignals aufweist.

Das reflektoreinheitaseitige Mittel zur alternierenden Phasenveränderung des zu reflektierenden Radarsignals kann zweckmäßigerweise als steuerbarer Phasenschieber ausgebildet sein.

Der Radarsensor der erfindungsgemäßen Radaranlage ist vorteilhaft so ausgestaltet, daß das von der aktiven Reflektoreinheit an ihn reflektierte modulierte Radarsignal derart demodulierbar ist, daß in diesem Radarsignal enthaltene sein als Grundlage der Entfernungsmessung dienendes Nutzsignal beeinträchtigende Störsignalanteile reduziert werden.

Darüber hinaus ist der Radarsensor gemäß einer weiteren vorteilhaften Ausführungsform der erfindungsgemäßen Radaranlage derart ausgebildet, daß die von mehreren aktiven Reflektoreinheiten modulierten und an ihn reflektierten Radarsignale im Radarsensor trennbar sind.

Vorteilhaft weist der Radarsensor zur Reduzierung der im Radarsignal enthaltenen Störsignalanteile eine Bandpaßfilterung und zur Trennung der von unterschiedlichen aktiven Reflektoreinheiten zuruckgesendeten Radarsignale eine geeignete Demodulationsstufe auf.

Eine technisch-konstruktiv einfache und wirtschaftlich wenig kostenaufwendige Ausgestaltung der erfindungsgemäßen Meßeinrichtung bzw. Radaranlage wird erreicht, wenn der zumindest eine Radarsensor der Meßeinrichtung am Hebezeug und die zumindest eine aktive Reflektoreinheit am Lastaufnahmemittel angeordnet ist.

Zweckmäßigerweise sind entsprechend ein Radarsensor an einer Krankatze eines Containerkrans und drei aktive Reflektoreinheiten an einem Spreader des Containerkrans angeordnet.

Um eine möglichst hohe Meßgenauigkeit zu gewährleisten ist es vorteilhaft, wenn die drei aktiven Reflektoreinheiten so am Spreader des Containerkrans angeordnet sind, daß sie einen möglichst großen Abstand zueinander aufweisen.

Wenn weitere Positionsveränderungen des Lastaufnahmemittels in bezug auf die Krankatze erfaßt werden sollen ist es zweckmäßig, zur Erfassung von Dreh- und/oder Kippbewegungen des Spreaders bzw. eines am Spreader aufgenommenen Containers weitere aktive Reflektoreinheiten vorzusehen.

Der Radarsensor kann zur Erzeugung des Radarsignals einen Signalgenerator aufweisen.

Vorteilhaft hat der Radarsensor des weiteren einen Richtkoppler, mittels dem das erzeugte Radarsignal über die Antenne in Richtung der aktiven Reflektoreinheiten abstrahlbar ist.

Gemäß einer weiteren vorteilhaften Ausführungsform der erfindungsgemäßen Meßeinrichtung weist der Radarsensor einen Mischer auf, mittels dem die empfangenen reflektierten Radarsignale ins Basisband heruntermischbar sind.

Des weiteren kann der Radarsensor eine Filtereinrichtung aufweisen, mittels der die Spektralanteile der empfangenen reflektierten Radarsignale selektier- und die Radarsignalanteile aller aktiven Reflektoreinheiten trennbar sind.

Wenn die Filterung der Radarsignale schaltungstechnisch durchgeführt werden soll ist es vorteilhaft, wenn der Radarsensor eine Filterbank aufweist.

Zur digitalen Filterung der Radarsignale ist es zweckmäßig, wenn der Radarsensor einen A/D-Wandler aufweist, mittels dem die empfangenen reflektierten Radarsignale in digitale Signale umwandelbar sind, so daß ihre Filterung digital im Prozessor des Radarsensors durchführbar ist.

Hierbei kann dann die Filtereinrichtung vorteilhaft als Antialiasing-Tiefpaßfilter, vorzugsweise als Bandpaßfilter, ausgebildet sein, mittels dem die den aktiven Reflektoreinheiten zuordnungsfähigen Radarsignalanteile durchlaß- und andere Radarsignalanteile unterdrückbar sind.

Bei einem erfindungsgemäßen Verfahren zur Positionsbestimmung von Lastaufnahmemitteln bei Hebezeugen dient als Meßgröße zur Positionsbestimmung des Lastaufnahmemittels die Phasendifferenz bzw. die zeitliche Änderung der Phasendifferenz zwischen einem gesendeten und einem empfangenen Mikrowellen-, vorzugsweise Radarsignal.

Zweckmäßigerweise führt ein Radarsensor eine Messung bei zumindest zwei unterschiedlichen Radarfrequenzen durch und bildet durch Auswerten der Phasendifferenzen aus dem gesendeten und dem empfangenen Radarsignal bei den unterschiedlichen Radarfrequenzen ein Maß für die Entfernung und/oder die Entfernungsänderung zwischen dem Radarsensor und einer aktiven Reflektoreinheit.

Zur Erhöhung der Genauigkeit der ermittelten Distanzwerte ist es vorteilhaft, wenn die Distanzwerte zwischen dem bzw. allen Radarsensoren einer und der bzw. allen aktiven Reflektoreinheiten andererseits gleichzeitig bestimmt werden.

Um gegenseitige Störungen bei mehreren vorhandenen Radarsensoren auszuschließen ist es zweckmäßig, wenn die Radarsensoren nicht gleichzeitig auf derselben Radarfrequenz senden bzw. messen.

Vorteilhaft moduliert jede aktive Reflektoreinheit das von ihr empfangene Radarsignal in einer für sie charakteristischen Weise, wobei jeder Radarsensor das derart modulierte und zu ihm reflektierte Radarsignal der betreffenden aktiven Reflektoreinheit zuordnet.

Jede aktive Reflektoreinheit moduliert das von ihr empfangene Radarsignal in einer für sie charakteristischen Weise, so daß die derart modulierten reflektierten Radarsignale unterschiedlicher aktiver Reflektoreinheiten im Radarsensor getrennt werden können.

Gemäß einer weiteren vorteilhaften Ausführungsform des erfindungsgemäßen Verfahrens wird das von einer aktiven Reflektoreinheit empfangene Radarsignal moduliert und zu einem Radarsensor reflektiert, und das zum Radarsensor reflektierte modulierte Radarsignal im Radarsensor derart demoduliert, daß in diesem Radarsignal enthaltene, sein als Grundlage der Entfernungsmessung dienendes Nutzsignal beeinträchtigende Störsignalanteile reduziert werden.

Zur Modulation des von der aktiven Reflektoreinheit zum Radarsensor reflektierten Radarsignals kann die Verstärkung eines Verstärkers der aktiven Reflektoreinheit während der Reflexion des Radarsignals geändert werden.

Hierbei, kann die Änderung der Verstarkung des Verstarkers der aktiven Reflektoreinheit in kleinen Stufen variiert werden.

Es ist möglich, die Änderung der Verstärkung des Verstärkers der aktiven Reflektoreinheit nach bestimmten pseudozufälligen Modulationssequenzen durchzuführen.

Hierbei können als Modulationssequenzen Barker-Codes, Schieberegister(M)-Sequenzen, Golay-Codes, Gold-Codes oder Huffmann-Sequenzen verwendet werden.

Eine geeignete Modulation des von der aktiven Reflektoreinheit zum Radarsensor reflektierten Radarsignals kann auch bewerkstelligt werden, indem der Verstärker der betreffenden aktiven Reflektoreinheit während der Reflexion des Radarsignals alternierend an- und ausgeschaltet wird.

Hierbei kann es zweckmäßig sein, den Verstärker jeder aktiven Reflektoreinheit mit einem für die betreffende aktive Reflektoreinheit charakteristischen Takt ein- und auszuschalten.

Zur Ausschließung von gegenseitigen Störungen ist es zweckmäßig, wenn der für jede aktive Reflektoreinheit charakteristische Takt so gewählt wird, daß sich die reflektierten Radarsignale im spektralen Nutzband spektral nicht überlappen.

Ein weiteres geeignetes Modulationsverfahren kann in der zeitlichen Verzögerung des von der aktiven Reflektoreinheit zum Radarsensor zu reflektierenden Radarsignals liegen.

Die Zeitverzögerurig des zu reflektierenden Radarsignals kann vorteilhaft mittels eines Oberflächenwellenelements durchgeführt werden.

Hierbei sollte die Zeitverzögerung so groß gewählt werden, daß Störsignalanteile, beispielsweise verursacht durch Reflexionen an Gegenständen im Meßbereich, durch die Ausbreitungsdämpfung im Freiraum weitestgehend abklingen.

Zweckmäßigerweise wird die Zeitverzögerung für jede aktive Reflektoreinheit unterschiedlich groß gewählt.

Eine noch zuverlässigere Zuordnung der Radarsignale zu den sie abstrahlenden aktiven Reflektoreinheiten kann erzielt werden, wenn eine Amplitudenmodulation des Radarsignals mittels Verstellung bzw. Ein- und Ausschalten des Verstärkers mit der Zeitverzögerung des Radarsignals kombiniert wird.

Um eine zuverlässige und ungestörte Abstrahlung des von der aktiven Reflektoreinheit zum Radarsensor abgestrahlten Radarsignals zu sichern, sollte hierbei die Modulationsfrequenz, z.B. 1 MHz, so gewählt werden, daß sie invers mit der Zeitverzögerung, z.B. 1 µs, eines Laufzeitglieds verkoppelt ist.

Vorteilhaft werden radarsensorseitig die eingehenden Radarsignale mittels eines FMCW (freguency modulated continous wave)-Radar-Auswahlverfahrens getrennt und den jeweiligen aktiven Reflektoreinheiten zugeordnet.

Zur Modulation des von der aktiven Reflektoreinheit in Richtung auf den Radarsensor abgestrahlten Radarsignals kann auch eine Frequenzversetzung des von der aktiven Reflektoreinheit reflektierten Radarsignals dienen.

Des weiteren ist es möglich, daß das zu reflektierende Radarsignal von der aktiven Reflektoreinheit in seiner Phase alternierend geändert wird.

Vorteilhaft werden bei dem erfindungsgemäßen Verfahren zumindest zwei Meßwerte für unterschiedliche Übertragungswege bestimmt und diese Meßwerte in einem geometrischen Gleichungssystem kombiniert, um die räumliche Position des Lastaufnahmemittels zu bestimmen.

Zur Erhöhung der Sicherheit des erfindungsgemäßen Verfahrens und zur schnelleren Entdeckung etwaiger Fehlerquellen ist es vorteilhaft, wenn Meßwerte von mehr unterschiedlichen Übertragungswegen als erforderlich bestimmt und in einem überbestimmten geometrischen Gleichungssystem kombiniert werden. Darüber hinaus sind bei dem in der vorstehend erläuterten Weise modifizierten Verfahren auch Mittelwertbildungen möglich, welche zu einer Erhöhung der Genauigkeit des erfindungsgemäßen Verfahrens führen.

Im folgenden wird die Erfindung an Hand von Ausführungsformen unter Bezugnahme auf die Zeichnung näher erläutert. Es zeigen:

FIG 1     eine prinzipielle Darstellung einer Ausführungsform einer erfindungsgemäßen Meßeinrichtung;

FIG 2     eine prinzipielle Darstellung einer möglichen Konfiguration der erfindungsgemäßen Meßeinrichtung;

FIG 3     eine Prinzipdarstellung einer ersten Ausführungsform einer aktiven Reflektoreinheit der erfindungsgemäßen Meßeinrichtung;

FIG 4     eine Prinzipdarstellung einer zweiten Ausführungsform der aktiven Reflektoreinheit der erfindungsgemäßen Meßeinrichtung;

FIG 5     eine Prinzipdarstellung einer dritten Ausführungsform der aktiven Reflektoreinheit der erfindungsgemäßen Meßeinrichtung;

FIG 6     eine Darstellung einer Möglichkeit zur Anordnung einer Ausführungsform der erfindungsgemäßen Meßeinrichtung bei einem als Containerkran ausgebildeten Hebezeug;

FIG 7     eine Prinzipdarstellung der in FIG 6 im Zusammenhang mit dem Containerkran dargestellten erfindungsgemäßen Meßeinrichtung; und

FIG 8     eine Darstellung einer Ausführungsform einer Modulationseinrichtung der aktiven Reflektoreinheit der erfindungsgemäßen Meßeinrichtung.

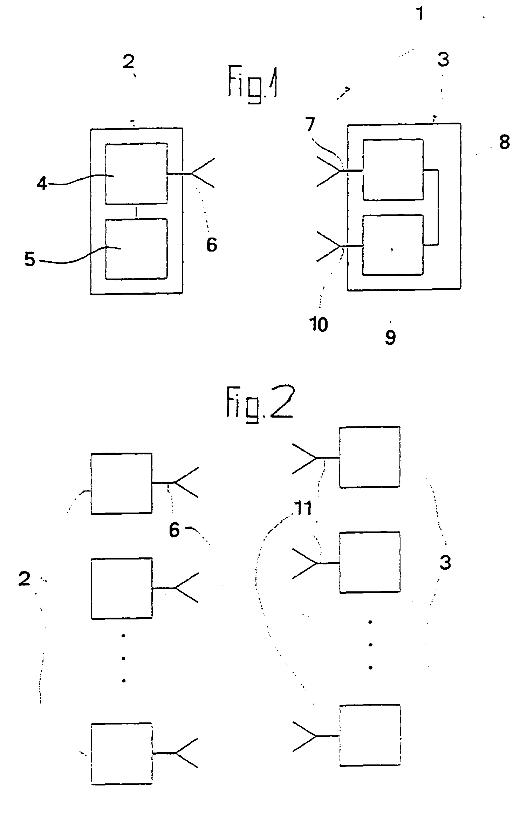

Eine in FIG 1 hinsichtlich ihrer grundlegenden Ausführung dargestellte erfindungsgemäße Meßeinrichtung ist als Mikrowellenmeßanlage in Form einer Radaranlage 1 ausgestaltet. Bei. dem in FIG 1 dargestellten Ausführungsbeispiel der Radaranlage 1 ist ein Radarsensor 2 und eine aktive Reflektoreinheit 3 vorgesehen.

An dieser Stelle sei bereits darauf hingewiesen, daß je nach Anforderungsprofil hinsichtlich der Freiheitsgrade der zu überwachenden bzw. zu messenden Bewegung eine entsprechend angepaßte Anzahl von Radarsensoren 2 bzw. von aktiven Reflektoreinheiten 3 vorgesehen werden kann, um die zu Überwachende bzw. zu messende Bewegung in jedem Fall hinsichtlich jedes möglichen Freiheitsgrades der Bewegung exakt erfassen zu können.

Der Radarsensor 2 umfaßt ein Radarmodul 4 und einen Prozessor 5.

Das Radarmodul 4 kann ein Signalerzeugungselement in Form eines Oszillators enthalten, wobei der Oszillator zweckmäßigerweise in seiner Frequenz einstellbar ist.

Der Prozessor 5 dient zur Steuerung und zur Auswertung der von der aktiven Reflektoreinheit 3 zum Radarsensor 2 reflektierten Meß- bzw. Radarsignale.

Des weiteren hat der Radarsensor 2 eine Antenne 6, über die bzw. mittels der ein Radarsignal mit der durch den frequenzverstellbaren Oszillator des Radarmoduls 4 bestimmten Frequenz $F_{HF}$ in Richtung auf die aktive Reflektoreinheit 3 ausgesendet werden kann.

Die aktive Reflektoreinheit 3 hat in der in FIG 1 dargestellten Ausführungsform eine Empfangsantenne 7, mittels der das vom Radarsensor 2 in Richtung auf die aktive Reflektoreinheit 3 abgestrahlte Radarsignal empfangbar ist. Von der Empfangsantenne 7 wird das Radarsignal an einen Verstärker 8 der aktiven Reflektoreinheit 3 weitergeleitet. Das im Verstärker 8 verstärkte Radarsignal wird einem Modulator 9 der aktiven Reflektoreinheit 3 zugeführt und dort moduliert. Das im Modulator 9 modulierte Radarsignal wird dann über eine Sendeantenne 10 der aktiven Reflektoreinheit 3 zurück in Richtung auf den Radarsensor 2 reflektiert bzw. angestrahlt.

Bei der in FIG 2 prinzipiell dargestellten Ausführungsform der erfindungsgemäßen Meßeinrichtung ist eine Mehrzahl von Radarsensoren 2 vorgesehen, die in FIG 2 links untereinander dargestellt sind. Des weiteren hat die in FIG 2 dargestellte Meßeinrichtung bzw. Radaranlage ebenfalls eine Vielzahl von aktiven Reflektoreinheiten 3, die in FIG 2 rechts untereinander dargestellt sind. Bei entsprechender Konfiguration der in FIG 2 dargestellten Radaranlage kann jeder Radarsensor 2 mit jeder aktiven Reflektoreinheit 3 kommunizieren, wobei sich eine entsprechende Anzahl von Meßwegen zur Erfassung von Abständen bzw. Abstandsveränderungen ergibt.

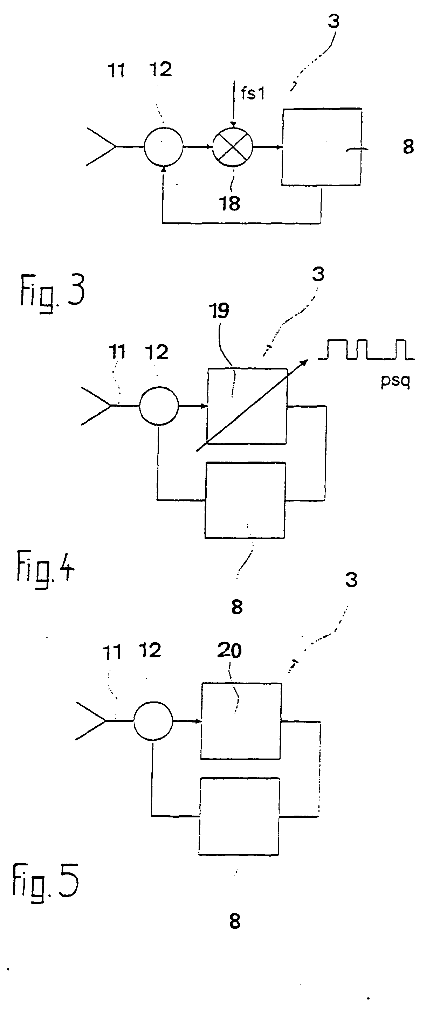

Wie aus FIG 2 hervorgeht, haben die dort dargestellten aktiven Reflektoreinheiten jeweils nur eine kombinierte Sende- und Empfangsantenne 11. Eine derartige kombinierte Sende- und Empfangsantenne 11 ist bei aktiven Reflektoreinheiten 3 realisierbar, die, wie in den FIG 3 bis 5 dargestellt, einen Richtkoppler 12, z.B. einen Zirkulator, aufweisen.

Selbstverständlich ist es bei alternativ ausgebildeten erfindungsgemäßen Radaranlagen 1 auch möglich, den Radarsensor 2 sowohl mit einer Sende- als auch mit einer Empfangsantenne auszurüsten.

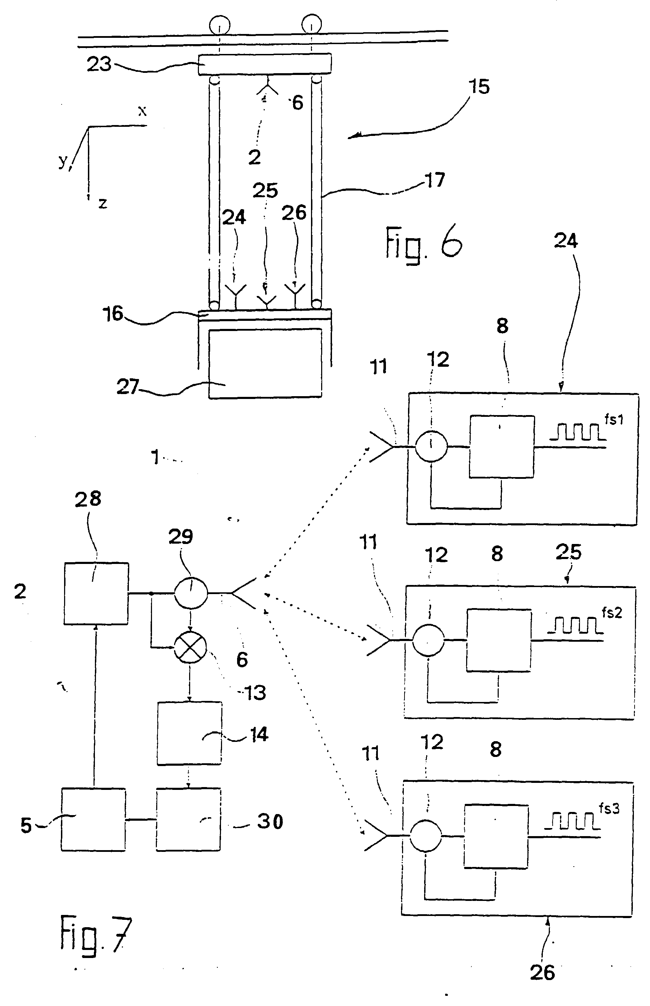

Der Radarsensor 2 weist eine Einrichtung zur Bestimmung der Phasendifferenz zwischen dem von ihm abgestrahlten Radarsignal und dem von der aktiven Reflektoreinheit 3 zu ihm reflektierten Radarsignal auf. Diese Einrichtung zur Erfassung der Phasendifferenz zwischen den genannten Radarsignalen kann, wie sich insbesondere aus FIG 7 ergibt, einen Mischer 13 und einen Filter 14 aufweisen, auf deren Funktion und Zusammenwirken später noch eingegangen werden wird.

Aus zumindest einem in der genannten Weise detektierten Phasenwert kann dann im Prozessor 5 des Radarsensors 2 in später noch beschriebener Art und Weise eine Entfernungsänderung bestimmt werden. Mit mindestens zwei in der genannten Weise detektierten Phasenwerten, die bei mindestens zwei unterschiedlichen Radarfrequenzen bestimmt worden sind, kann eine absolute Distanzmessung in noch zu beschreibender Art und Weise im Prozessor 5 des Radarsensors 2 durchgeführt werden.

Zur Positionsbestimmung von Lastaufnahmemitteln werden vorzugsweise die aktiven Reflektoreinheiten 3 am Lastaufnahmemittel angebracht, wobei der Radarsensor 2 entsprechend vorzugsweise am Hebezeug angeordnet wird. Prinzipiell ist jedoch auch eine gleichwertige Anordnung in umgekehrter Weise möglich. Je nach der Dimension des Freiheitsgrads der Bewegung des Lastaufnahmemittels relativ zum Hebezeug ist es notwendig, mehrere Radarsensoren 2 und/oder mehrere aktive Reflektoreinheiten 3 zu verwenden, um die dimensionale Ausrichtung des Lastaufnahmemittels in bezug auf das Hebezeug eindeutig bestimmen zu können. Beispielsweise sind ein Radarsensor 2 und eine aktive Reflektoreinheit 3 für eine reine Distanzmessung und ein Radarsensor 2 und zwei aktive Reflektoreinheiten 3 bzw. zwei Radarsensoren 2 und eine aktive Reflektoreinheit 3 für eine zweidimensionale Positionsbestimmung des Lastaufnahmemittels in bezug auf das Hebezeug im Raum erforderlich. Zur Erfassung der vollständigen Lage des Lastaufnahmemittels im Raum in bezug auf das Hebezeug sind dann entsprechend mehrere Radarsensoren 2 bzw. aktive Reflektoreinheiten 3 nötig.

Voraussetzung für eine exakte Erfassung der Position des Lastaufnahmemittels in bezug auf das Hebezeug im Raum ist, daß sich alle Radarsensoren 2 und aktiven Reflektoreinheiten 3 an unterschiedlichen räumlichen Positionen befinden. Hieraus ergibt sich dann eine entsprechende Anzahl unterschiedlicher Meßwege. Zur Positionsbestimmung des Lastaufnahmemittels in bezug auf das Hebezeug ist dann in bekannter Weise ein Gleichungssystem von geometrischen Triangulationsgleichungen zu lösen. Unter Umständen kann es vorteilhaft sein, die Anzahl der Meßwege größer zu wählen als eigentlich zur Erfassung der Position des Lastaufnahmemittels erforderlich wäre, um so redundante Meßinformationen zu erhalten, d.h. also, ein überbestimmtes Gleichungssystem von geometrischen Triangulationsgleichungen. Auf diese Art und Weise ist es möglich, etwaige Störungen zu erkennen oder auch eine höhere Meßgenauigkeit zu erreichen, etwa durch Mittelwertbildungen.

Bei einem gemäß der Darstellung in FIG 6 als Containerkran 15 ausgebildeten Hebezeug wird der Freiheitsgrad der Bewegung des als Spreader 16 ausgebildeten Lastaufnahmemittels durch die Wahl des Hebemechanismus, z.B. durch die Art der Verseilung 17 festgelegt. Die Anordnung der Radarsensoren 2 bzw. der aktiven Reflektoreinheiten 3 ist bei einer Radaranlage 1 für einen derartigen Containerkran 15 vorzugsweise hieran anzupassen.

Wenn zur erfindungsgemäßen Radaranlage 1 mehrere Radarsensoren 2 oder mehrere aktive Reflektoreinheiten 3 gehören, so ist es für eine hochgenaue Messung der Position des Lastaufnahmemittels 16 sinnvoll, wenn die Distanzwerte für alle Meßwege gleichzeitig bestimmt werden. Dies ist jedoch nur dann möglich, wenn sich die unterschiedlichen Radarsensoren 2 bzw. aktiven Reflektoreinheiten 3 nicht gegenseitig stören.

Bei mehreren vorgesehenen Radarsensoren 2 kann dies z.B. dadurch sichergestellt werden, daß zwei Radarsensoren 2 nicht gleichzeitig auf einer Radarfrequenz senden bzw. messen.

Bei mehreren vorgesehenen aktiven Reflektoreinheiten 3 ist eine gegenseitige Störung durch eine geeignete Modulation des von den aktiven Reflektoreinheiten reflektierten Radarsignals sicherzustellen.

Um gegenseitige Störungen mehrerer aktiver Reflektoreinheiten 3 der Radaranlage 1 zu unterbinden ist es beispielsweise möglich, wie in FIG 3 dargestellt, das Radarsignal jeder aktiven Reflektoreinheit 3 um eine für die betreffende aktive Reflektoreinheit 3 charakteristische Frequenz zu versetzen. Jede aktive Reflektoreinheit 3 beinhaltet hierfür ein Mittel zur Frequenzversetzung in Form eines Mischerbausteins 18. Dieser Mischerbaustein 18 frequenzmischt das vom Radarsensor 2 eingehende Radarsignal mit einem Referenzsignal fs1. Je nach Ausführungsart des Mischerbausteins 18 ist hierfür ein Zweiseitenband- bzw. Einseitenbandmischer vorgesehen. Im Falle des Einseitenbandmischers wird das vom Radarsenor 2 eintreffende Radarsignal frequenzversetzt von der aktiven Reflektoreinheit 3 zum Radarsensor 2 zurückgesandt bzw. reflektiert und tritt im Spektrum des Sensorsignals somit bei der Versatzfrequenz auf. Durch eine geeignete Bandpaßfilterung mit anschließender Demodulation können Störechos unterdrückt werden; bei Verwendung unterschiedlicher Modulationsfrequenzen an unterschiedlichen aktiven Reflektoreinheiten 3 können die Radarsignalanteile unterschiedlicher aktiver Reflektoreinheiten 3 im Radarsensor 2 voneinander getrennt werden.

Bei einer in FIG 4 dargestellten Ausführungsform der aktiven Reflektoreinheit 3 erfolgt die Modulation des von der aktiven Reflektoreinheit 3 zum Radarsensor 2 reflektierten Radarsignals durch ein Mittel zur Phasenveränderung in Form eines steuerbaren Phasenschiebers 19. Dieser steuerbare Phasenschieber 19 verändert das vom Radarsensor 2 eintreffende Radarsignal bezüglich der Phase. Die Änderung der Phase wird hierbei entsprechend bekannten Schemata durchgeführt.

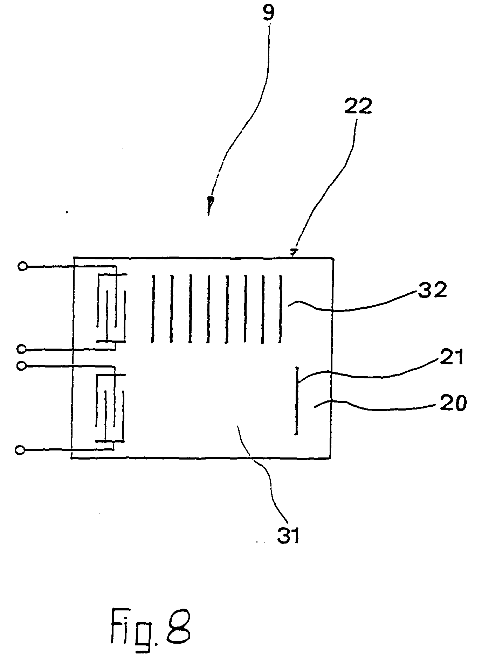

Eine weitere Modulations- bzw. Codierungsmöglichkeit für die von den aktiven Reflektoreinheiten 3 zum Radarsensor 2 zurückgesandten Radarsignale kann, wie in FIG 5 dargestellt, bewerkstelligt werden, indem die zum Radarsensor 2 zu reflektierenden Radarsignale in jeder aktiven Reflektoreinheit 3 um einen definierten Zeitversatz verzögert werden. Hierzu weisen die betreffenden aktiven Reflektoreinheiten 3 ein Mittel zur Zeitverzögerung in Form eines Laufzeitglieds 20 auf. Die Zeitverzögerung ist hierbei so groß zu wählen, daß andere Störsignalanteile, beispielsweise verursacht durch Reflexionen an Gegenständen im Meßbereich, durch die Ausbreitungsdämpfung im Freiraum weitestgehend abklingen. Die Zeitverzögerungswerte werden für jede aktive Reflektoreinheit 3 unterschiedlich gewählt, so daß die Radarsignalanteile der unterschiedlichen aktiven Reflektoreinheiten 3 im Radarsensor 2 beispielsweise mittels bekannter FMCW-(frequency modulated continous wave)-Radar-Auswerteverfahren eindeutig getrennt werden können. Bei der Dimensionierung der Laufzeitglieder 20 der unterschiedlichen aktiven Reflektoreinheiten 3 ist darauf zu achten, daß es in dem für die vorgesehene Applikation der Radaranlage 1 gegebenen Entfernungsbereich nicht zu Überlappungen der Laufzeiten verschiedener Radarsignalanteile der aktiven Reflektoreinheiten 3 kommen kann. In FIG 8 dargestellte Verzögerungsleitungen 21 der Laufzeitglieder 20 werden, wie sich auch aus FIG 8 ergibt, in Form von Oberflächenwellenelementen 22 ausgeführt.

Die vorstehend an Hand der FIG 3 bis 5 erläuterten Modulierungs- bzw. Codierungsverfahren können selbstverständlich auch miteinander kombiniert werden. Die bei den vorstehend geschilderten Radaranlagen 1 auch mögliche Amplitudenmodulation wird später an Hand von FIG 7 erläutert werden.

Die Messung bzw. die Auswertung der im Radarsensor 2 ankommenden Radarsignale wird unter Beachtung der im folgenden angegebenen Grundlagen durchgeführt.

Die Phasendifferenz φ zwischen dem vom Radarsensor 2 abgestrahlten Sendesignal und dem von der aktiven Reflektoreinheit 3 zum Radarsensor 2 reflektierten Empfangssignal beträgt

$$\varphi = 2 \times \pi \times f_{HF} \times \tau,$$

wobei $\tau$ die gesamte Laufzeit des Radarsignals darstellt. Neben konstanten Offseteinflüssen ist die Laufzeit über die Radar- bzw. Mikrowellenausbreitungsgeschwindigkeit c direkt mit der Entfernung d zwischen Radarsensor 2 und aktiver Reflektoreinheit 3 verknüpft. Es gilt

$$\tau = \tau\text{offs} + \frac{2 \times d}{c}$$

Aufgrund der Periodizität der Phase und wegen des im allgemeinen unbekannten Offset eignet sich eine Phasenmessung bei nur einer Radarfrequenz lediglich zur Bestimmung von differentiellen Entfernungsänderungen. Ein absoluter Positionswert kann hierbei nur durch kontinuierliche Bestimmung der Entfernungsänderung im Anschluß an eine Kalibriermessung relativ zum Kalibrierungs-Bezugspunkt bestimmt werden. Bei einer kontinuierlichen Messung ist dafür Sorge zu tragen, daß die Messung so schnell erfolgt, daß zwischen zwei Messungen keine so große Entfernungsänderung stattfindet, die eine Phasenänderung größer als 180 Grad nach sich ziehen würde. Diese Bedingung entspricht dem allgemein bekannten Abtasttheorem. Eine kontinuierliche Verfolgung der Phase wird häufig auch als Dopplermessung bezeichnet, wobei die zeitliche Ableitung der Phase der Dopplerfrequenz entspricht. Die Dopplerfrequenz ist proportional zur Relativgeschwindigkeit zwischen Radarsensor 2 und aktiver Reflektoreinheit 3 in Richtung der Signalübertragung.

Für eine absolute Entfernungsmessung müssen mindestens zwei Phasenwerte, die bei mindestens zwei unterschiedlichen Radarfrequenzen bestimmt werden, ausgewertet werden. Ist $\Delta f_{HF}$ die Frequenzdifferenz zwischen zwei Radarfrequenzen $f_{HF1}$ und $f_{HF2}$, so gilt für die Differenz $\Delta \varphi$ zwischen den gemessenen Phasenwerten φ1 und φ2:

$$\Delta\varphi = 2 \times \tau \times \Delta f_{HF} \times \tau$$

wird $\Delta f_{HF}$ nicht zu groß gewählt, so ist $\Delta\varphi$ innerhalb eines großen Entfernungsbereichs eindeutig. Zur Gewährleistung eines optimalen Meßeffekts ist $\Delta f_{HF}$ für eine Entfernungsmessung allerdings auch nicht unnötig klein zu wählen. Ein gleichzeitig hoher Meßeffekt verbunden mit einem großen Eindeutigkeitsbereich kann bei Verwendung noch weiterer Meßfrequenzen und somit weiterer Phasenmeßwerte erreicht werden. Im Grenzfall einer kontinuierlichen Freguenzmodulation wird die Radarfrequenz mit der Zeit verändert und die Phasenänderung gemessen. Bei einer linearen Frequenzmodulation kommen die bekannten Verfahren zur FMCW (frequency modulated continous wave)-Signalverarbeitung in Frage. Angemerkt sei an dieser Stelle, daß auf die anwendbaren Verfahren zur Entfernungsmessung über die Frequenz hier nicht speziell eingegangen wird, da eine Frequenz lediglich eine zeitliche Änderung der Phase ist und somit alle frequenzauswertenden Radar-Meßmethoden auf den oben genannten Phasenbeziehungen beruhen.

Besonders vorteilhaft für eine hochgenaue Positionsmessung ist es, die zeitliche Änderung der Phase bei einer Radarfrequenz, also die differentielle Entfernungsmessung, mit den Phasendifferenzwerten bei mehreren Radarfrequenzwerten, also die absolute Entfernungsmessung, in Verbindung zu setzen. Die absoluten Meßwerte werden hierbei z.B. durch die wesentlich genaueren differentiellen Änderungswerte korrigiert. Analog zu den obigen Ausführungen ist auch hier auf einen ausreichend schnellen Meßvorgang zu achten.

Für eine exakte Entfernungsmessung ist des weiteren wichtig, daß die Radarfrequenz und insbesondere die Frequenzänderung sehr exakt eingestellt und gehalten werden kann. Neben analogen Regelschleifen und Kalibriereinrichtungen mit Referenzlaufzeitgliedern bieten sich hierfür insbesondere Phasenregelschleifen und die direkte digitale Signalsynthese an.

Im folgenden wird die vorstehend in ihren Grundzügen geschilderte Radaranlage 1 im Zusammenhang mit dem in FIG 6 prinzipiell dargestellten Containerkran 15 erläutert. Der Radarsensor 2 der Radaranlage 1 ist an einer Krankatze 23 des Containerkrans 15 angebracht. Die drei aktiven Reflektoreinheiten 24, 25, 26 der Radaranlage 1 des Containerkrans 15 befinden sich auf dem Spreader 16 des Containerkrans 15. Der Spreader 16 dient zur Aufnahme eines Containers 27, der mittels des Containerkrans 15 aufgenommen, transportiert und abgesetzt werden soll.

Die aktiven Reflektoreinheiten 24, 25, 26 sind am Spreader 16 so angeordnet, daß sich zwischen ihnen ein möglichst großer Abstand befindet. Hierdurch wird erreicht, daß eine seitliche Auslenkung des Spreaders 16 in bezug auf die Krankatze 23 zu max. unterschiedlichen Entfernungsänderungen innerhalb der Meßwege zwischen dein Radarsensor 2 einerseits und den aktiven Reflektoreinheiten 24, 25, 26 andererseits führt.

Wie vorstehend bereits erwähnt, können bei alternativen Ausführungsformen sowohl der Anbringungsort als auch die Anzahl von Radarsensoren 2 bzw. aktiven Reflektoreinheiten 3 vertauscht werden.

Die bei der Ausfuhrungsform gemäß FIG 6 gewählte Ausgestaltung der Radaranlage 1 mit einem Radarsensor 2 und drei aktiven Reflektoreinheiten 24, 25, 26 und Anordnung des einen Radarsenors 2 an der Krankatze 23 und der drei aktiven Reflektoreinheiten 24, 25, 26 am Spreader 16 des Containerkrans 15 hat den Vorteil einer besonders einfachen Anbringung und einer kostengünstigen Realisierbarkeit. Der Radarsensor 2 ist an der Krankatze 23 so anzubringen, daß er möglichst einfach zu montieren und zu warten ist. Sofern mehrere Radarsensoren 2 vorgesehen wären, müßten diese mit möglichst maximalem Abstand an der Krankatze 23 angebracht werden. Dies könnte in aller Regel nicht gewährleistet werden, da es auf der Krankatze 23 nur wenig gut zugängliche Orte gibt. Daher wird bei der in FIG 6 dargestellten Ausführungsform der einzig vorgesehene Radarsensor 2 an der Krankatze 23, z.B. an einem Montageloch im Bereich des Führerhauses angebracht.

Die Montage der örtlich zu verteilenden aktiven Reflektoreinheiten 3 am Spreader 16 des Containerkrans 15 ist vergleichsweise einfach möglich, da der Spreader 16 bis auf den Boden abgesenkt werden kann und somit von allen Seiten gut zuganglich ist.

Kostengünstig ist die in FIG 6 dargestellte Ausführungsform der Radaranlage 1 deshalb, da die gesamte Radarsignalverarbeitung innerhalb des einzig vorgesehenen Radarsensors 2 durchgeführt werden kann; eine aufwendige Übertragung von Meßdaten zu einer Zentraleinheit oder die Verwendung mehrerer Prozessoren 5 sind somit nicht notwendig. Der Radarsensor 2 der Radaranlage 1 ist im allgemeinen deutlich aufwendiger als die aktiven Reflektoreinheiten 3 der Radaranlage 1.

Grundsätzlich ist es möglich, weitere aktive Reflektoreinheiten 3 - wie bei der Ausführungsform gemäß FIG 6 - oder weitere Radarsensoren 2 - wie bei der alternativ angegebenen Ausführungsform - vorzusehen. Hierdurch können Dreh- oder Kippbewegungen des Containers 27 bzw. des Spreaders 16 erfaßt werden.

Eine mögliche Ausgestaltung der Radaranlage 1 mit dem Radarsensor 2 und den drei aktiven Reflektoreinheiten 24, 25, 26 ist in FIG 7 dargestellt. Das vom Radarsensor 2 abzustrahlende Radarsignal wird mit Hilfe eines als Oszillator ausbildbaren Signalgenerators 28 erzeugt. Über einen Richtkoppler 29 des Radarsensors 2 wird das so erzeugte Radarsignal über die Antenne 6 des Radarsensors 2 in Richtung auf die aktiven Reflektoreinheiten 24, 25, 26 abgestrahlt. Die kombinierten Sende- und Empfangsantennen 11 der aktiven Reflektoreinheiten 24, 25, 26 empfangen das Signal und leiten es an den Verstärker 8 jeder aktiven Reflektoreinheit 24, 25, 26 weiter. Der Verstärker 8 verstärkt das bei ihm eingehende Radarsignal. Der Richtkoppler 12 der aktiven Reflektoreinheiten 24, 25, 26 entkoppelt das zu reflektierende Radarsignal von dem empfangenen Radarsignal. Über die kombinierte Sende- und Empfangsantenne 11 der aktiven Reflektoreinheiten 24, 25, 26 wird das zu reflektierende Radarsignal zum Radarsensor 2 zurückgesendet.

Um die von den aktiven Reflektoreinheiten 24, 25, 26 reflektierten Radarsignale im Radarsensor 2 separieren zu können, wird der Verstärker 8 jeder aktiven Reflektoreinheit 24, 25, 26 mit einem charakteristischen Takt fs1, fs2 bzw. fs3 einund ausgeschaltet. Dieser für jede aktive Reflektoreinheit 24, 25, 26 charakteristische Takt ist so zu wählen, daß sich die von den aktiven Reflektoreinheiten 24, 25, 26 zum Radarsensor 2 reflektierten Radarsignale im ausgewählten spektralen Nutzband, z.B. um fs1, fs2 und fs3, spektral nicht überlappen. Bei der dargestellten Ausführungsform wären geeignete Schaltfrequenzen beispielsweise fs1 = 100 kHz, fs2 = 125 kHz und fs3 = 150 kHz.

Bei einer Amplitudenmodulation durch Beeinflussung der Verstärker 8 der aktiven Reflektoreinheiten 24, 25, 26 ist es generell nicht notwendig, die Verstärkung der Verstärker 8 lediglich dual - also an oder aus - zu variieren. Verstärkungsänderungen in kleineren Schritten können ebenso zur Modulation der von den aktiven Reflektoreinheiten 24, 25, 26 zum Radarsensor 2 reflektierten Radarsignale verwendet werden. Ferner kann es vorteilhaft sein, die Verstärkungsänderungen nicht mit einem konstanten Taktverhältnis durchzuführen, sondern nach bestimmten pseudozufälligen Modulationssequenzen. Bekannte Modulations- bzw. Codesequenzen wie Barker-Codes, Schieberegister- (M) -Sequenzen, Golay-Codes, Gold-Codes oder Huffmann-Sequenzen können hierzu verwendet werden. Bei der in FIG 6 und FIG 7 dargestellten Ausführungsform würden vorzugsweise drei derartige Sequenzen verwendet werden, die nicht oder nur sehr wenig korreliert sind.

Durch den Mischer 13 des Radarsensors 2 werden die dort empfangenen, von den aktiven Reflektoreinheiten 24, 25, 26 reflektierten Radarsignale ins Basisband heruntergemischt. Neben Frequenzanteilen um 0 HZ ergeben sich Signalanteile bei der für die aktiven Reflektoreinheiten 24, 25, 26 charakteristischen Schaltfrequenz fs1, fs2 bzw. fs3 und deren Vielfachen.

Durch Bandpaßfilterung können die Spektralanteile selektiert und die Radarsignalanteile aller aktiven Reflektoreinheiten 24, 25, 26 voneinander getrennt werden.

Die Filterung kann entweder auf schaltungstechnischem Weg mittels eines als Filterbank ausgebildeten Filters 14 erfolgen oder in digitaler Weise im Prozessor 5, wobei dann eine A/D-Wandlung in einem dem Filter 14 nachgeordneten A/D-Wandler 30 vorzunehmen ist.

Die zuletzt geschilderte digitale Verarbeitung hat den Vorteil, daß Filter hoher Ordnung algorithmisch einfacher zu realisieren sind und die eigentliche Signaltrennung erst im Prozessor 5 erfolgt, so daß lediglich ein A/D-Wandler 30 benötigt wird. Bei dieser rein digitalen Verarbeitung ist der Filter 14 als Antialiasing-Tiefpaßfilter oder vorzugsweise als Bandpaßfilter ausgeführt, der alle drei Signalanteile um die für die aktiven Reflektoreinheiten 24, 25, 26 charakteristischen Schaltfrequenzen fs1, fs2 und fs3 passieren läßt, die restlichen höher- oder niederfrequenten Störanteile jedoch unterdrückt.

Zur Vereinfachung der Verarbeitung kann es vorteilhaft sein, wenn die drei getrennten bandpaßgefilterten Signalanteile auf eine gleiche Basisfrequenz heruntergemischt werden, wenn beispielsweise der erste Signalanteil mit fs1, der zweite Signalanteil mit fs2 und der dritte Signalanteil mit fs3 gemischt wird.

Während einer Messung werden die Signal-Phasenwerte für jeden Meßweg zwischen dem Radarsensor 2 und der betreffenden aktiven Reflektoreinheit 24, 25 bzw. 26 für mehrere Radarsignalfrequenzen bestimmt. In der oben beschriebenen Art und Weise werden diese Signal-Phasenwerte dann in Entfernungswerte umgerechnet. Durch kontinuierliche Auswertung mehrerer aufeinanderfolgender Messungen werden des weiteren die Entfernungsanderungen bestimmt. Aus den Entfernungswerten sowie den dazugehörigen Entfernungsänderungen werden über eine Triangulationsrechnung die Position des Spreaders 16 in bezug auf die Krankatze 23 und die räumliche Bewegung des Spreaders 16 berechnet.

Bei einer Regelung der Position des Spreaders 16, z.B. um Pendelbewegungen desselben bzw. des Containers 27 zu reduzieren, ist es besonders vorteilhaft, wenn die Regelung auf eine Art Kleinsignalansatz realisiert wird. Hierbei wird der Arbeitspunkt der Regelung basierend auf einer absoluten Positionsmnessung festgelegt. Die hierfür notwendige absolute Entfernungsmessung erfolgt, wie oben beschrieben, durch Auswerten der Phasendifferenzen bei mindestens zwei Radarmeßfrequenzen. Um diesen so bestimmten Arbeitspunkt wird die Regelung dann aber maßgeblich basierend auf den differentiellen Entfernungsmeßwerten durchgeführt. Für die differentielle Entfernungsmessung, die im allgemeinen genauer ist als die absolute, reicht, wie oben beschrieben, im Prinzip eine einzelne Radarmeßfrequenz aus.

In FIG 8 ist ein Ausführungsbeispiel für einen Modulator 9 einer aktiven Reflektoreinheit 3 dargestellt. Bei diesem Modulator 9 ist eine Amplitudenmodulation mit einer Zeitverzögerung kombiniert. Hierbei wird die Verstärkung des Verstärkers 8 der aktiven Reflektoreinheit 3 in regelmäßigen Abständen ein- und ausgeschaltet. Diese Modulationsfrequenz wird vorzugsweise so gewählt, daß sie invers mit der Zeitverzögerung des Laufzeitglieds 20 des Modulators 9 verkoppelt ist. Bei einer Modulationsfrequenz von 1 MHz ergibt sich somit eine Zeitverzögerung von 1 μs.

Durch eine derartige Ausgestaltung des Modulators 9 bzw. durch eine solche Verkoppelung von Amplitudenmodulation und Zeitverzögerung kann verhindert werden, daß das verstärkte und modulierte zu reflektierende Radarsignal wiederum in den Eingangskreis der aktiven Reflektoreinheit 3 gelangt, nochmals verstärkt wird und somit eine Übersteuerung oder Ruckkopplungsschwingungen verursacht. Durch die Verkoppelung der Verzögerungszeit mit der Modulationsfrequenz kann erreicht werden, daß der Eingangskreis der aktiven Reflektoreinheit 3 immer dann abgeschaltet ist, wenn das verstärkte und verzögerte zu reflektierende Radarsignal wieder zurück zum Radarsensor 2 abgestrahlt wird.

Wird die Verzögerungsleitung 21 des Laufzeitglieds 20 in Form es Oberflächenwellenelements 22 realisiert, so ist es besonders günstig, wenn unmittelbar auf einem Substrat 31, auf dem die Verzögerungsleitung 20 bzw. Laufzeitstrecke aufgebaut ist, auf eine Resonanzstruktur 32 aufgebracht wird, aus der die Modulationsfrequenz abgeleitet wird. Hierdurch wird in optimaler Weise sichergestellt, daß Laufzeitänderungen aufgrund von Temperaturdriften und Alterung des Substrats 31 eine proportionale Änderung der durch die Resonanzstruktur 32 aufgebrachten Modulationsfrequenz nach sich ziehen; d.h., da Zeitverzögerung und Modulationsfrequenz auf demselben Substrat 31 mit demselben physikalischen Grundprinzip erzeugt werden, daß die Zeitverzögerung und die Modulationsfrequenz in gewünschter Weise automatisch aneinander gekoppelt sind.

**Patentansprüche**

1. Meßeinrichtung zur Positionsbestimmung von Lastaufnahmemitteln bei Hebezeugen, dadurch gekennzeichnet, daß die Meßeinrichtung als Mikrowellenmeßanlage ausgebildet ist.

2. Meßeinrichtung nach Anspruch 1, die als Radaranlage (1) ausgebildet ist.

3. Meßeinrichturig nach Anspruch 2, bei der die Radaranlage (1) zumindest einen Radarsensor (2) und zumindest eine aktive Reflektoreinheit (3) aufweist.

4. Meßeinrichtung nach Anspruch 3, bei der der Radarsensor (2) ein Radarmodul (4) mit einem Oszillator zur Signalerzeugung und einen Prozessor (5) zur Steuerung und Auswertung der Radarsignale aufweist.

5. Meßeinrichtung nach Anspruch 4, bei der der Oszillator des Radarmoduls (4) in seiner Frequenz einstellbar ist.

6. Meßeinrichtung nach Anspruch 4 oder 5, bei der der Radarsensor (2) eine Antenne (6) aufweist, mittels der das Radarsignal mit der durch den Oszillator bestimmten Frequenz in Richtung auf die aktive Reflektoreinheit (3) abstrahlbar ist.

7. Meßeinrichtung nach einem der Ansprüche 3 bis 6, bei der der Radarsensor (2) eine Einrichtung (5) aufweist, mittels der die Phasendifferenz zwischen dem zur aktiven Reflektoreinheit (3) abgestrahlten und dem von der aktiven Reflektoreinheit (3) reflektierten Radarsignal erfaßbar ist.

8. Meßeinrichtung nach Anspruch 7, bei der die radarsensorseitige Einrichtung (5) zur Erfassung der Phasendifferenz zwischen dem abgestrahlten und dem empfangenen Radarsignal einen Mischer (13) und einen Filter (14) aufweist.

9. Meßeinrichtung nach einem der Ansprüche 3 bis 8, deren aktive Reflektoreinheit (3) eine Empfangsantenne (7) aufweist, mittels der vom Radarsensor (2) abgestrahlte Radarsignale empfangbar sind.

10. Meßeinrichtung nach einem der Ansprüche 3 bis 9, deren aktive Reflektoreinheit (3) einen Verstärker (8) zur Verstärkung eines vom Radarsensor (2) abgestrahlten und von ihr empfangenen Radarsignals aufweist.

11. Meßeinrichtung nach einem der Ansprüche 3 bis 10, deren aktive Reflektoreinheit (3) einen Modulator (9) aufweist, mittels dem das von ihr empfangene Radarsignal modulierbar ist, bevor es von der aktiven Reflektoreinheit (3) zum Radarsensor (2) reflektiert wird.

12. Meßeinrichtung nach Anspruch 11, deren aktive Reflektoreinheit (3) eine Sendeantenne (10) aufweist, mittels der das im Modulator (9) der aktiven Reflektoreinheit (3) modulierte Radarsignal zurück zum Radarsensor (2) abstrahlbar ist.

13. Meßeinrichtung nach einem der Ansprüche 3 bis 12, deren aktive Reflektoreinheit (3) einen Richtkoppler (12), z.B. einen Zirkulator, und eine kombinierte Sende- und Empfangsantenne (11) aufweist.

14. Meßeinrichtung nach einem der Ansprüche 11 bis 13, bei der der Modulator (9) jeder aktiven Reflektoreinheit (3;24, 25,26) das von ihr empfangene Radarsignal in einer für die betreffende aktive Reflektoreinheit (3;24,25,26) charakteristischen Weise moduliert, so daß das derart modulierte und an den Radarsensor (2) reflektierte Radarsignal vom Radarsensor (2) der betreffenden aktiven Reflektoreinheit (3;24,25,26) zuordnungsfähig ist.

15. Meßeinrichtung nach einem der Ansprüche 11 bis 14, bei der die Verstärkung des Verstärkers (8) der aktiven Reflektoreinheit (3) während der Reflexion des Radarsignals veränderbar ist.

16. Meßeinrichtung nach einem der Ansprüche 11 bis 15, bei der der Verstärker (8) der aktiven Reflektoreinheit (3) während der Reflexion des Radarsignals ein- und ausschaltbar ist.

17. Meßeinrichtung nach einem der Ansprüche 11 bis 16, bei der die aktive Reflektoreinheit (3) ein Mittel (20) zur zeitlichen Verzögerung des von ihr zum Radarsensor (2) zu reflektierenden Radarsignals aufweist.

18. Meßeinrichtung nach Anspruch 17, bei der das reflektoreinheitsseitige Mittel zur Verzögerung des zu reflektierenden Radarsignals als Laufzeitglied (20) ausgebildet ist, mittels dem das zu reflektierende Radarsignal um einen definierten Zeitversatz verzögerbar ist.

19. Meßeinrichtung nach Anspruch 17 oder 18, bei der das Mittel (20) der aktiven Reflektoreinheit (3) zur Verzögerung des zu reflektierenden Radarsignals ein Oberflächenwellenelement (22) umfaßt.

**20.** Meßeinrichtung nach Anspruch 19, bei der auf einem Substrat (31), auf dem eine Laufzeitstrecke (21) des Laufzeitglieds (20) ausgebildet ist, eine Resonanzstruktur (32) aufgebracht ist, aus der die Modulationsfrequenz ableitbar ist.

**21.** Meßeinrichtung nach einem der Ansprüche 11 bis 20, bei der die aktive Reflektoreinheit (3) ein Mittel (18) zur Freguenzversetzung des zu reflektierenden Radarsignals aufweist.

**22.** Meßeinrichtung nach Anspruch 21, bei der das reflektoreinheitsseitige Mittel zur Frequenzversetzung als Mischerbaustein (18) ausgebildet ist, mittels dem das von der aktiven Reflektoreinheit (3) empfangene Radarsignal mit einem Referenzsignal (fs1) frequenzmischbar ist.

**23.** Meßeinrichtung nach Anspruch 22, bei der der reflektoreinheitsseitige Mischerbaustein (18) als Zweiseitenband- bzw. Einseitenbandmischer ausgebildet ist.

**24.** Meßeinrichtung nach einem der Ansprüche 11 bis 23, bei der die aktive Reflektoreinheit (3) ein Mittel (19) zur alternierenden Phasenveränderung des zu reflektierenden Radarsignals aufweist.

**25.** Meßeinrichtung nach Anspruch 24, bei der das reflektoreinheitsseitige Mittel zur alternierenden Phasenveränderung des zu reflektierenden Radarsignals als steuerbarer Phasenschieber (19) ausgebildet ist.

**26.** Meßeinrichtung nach einem der Ansprüche 11 bis 25, deren Radarsensor (2) so ausgebildet ist, daß das von der aktiven Reflektoreinheit (3) an ihn reflektierte modulierte Radarsignal derart demodulierbar ist, daß in diesem Radarsignal enthaltene, sein als Grundlage der Entfernungsmessung dienendes Nutzsignal beeinträchtigende Störsignalanteile reduziert werden.

**27.** Meßeinrichtung nach einem der Ansprüche 11 bis 26, bei der der Radarsensor (2) so ausgebildet ist, daß die von mehreren aktiven Reflektoreinheiten (3;24,25,26) modulierten und an ihn reflektierten Radarsignale im Radarsensor (2) trennbar sind.

**28.** Meßeinrichtung nach Anspruch 27, bei der der Radarsensor (2) zur Reduzierung der im Radarsignal enthaltenen Störsignalanteile eine Bandpaßfilterung und zur Trennung der von unterschiedlichen aktiven Reflektoreinheiten (3;24,25,26) zurückgesendeten Radarsignale eine geeignete Demodulationsstufe aufweist.

**29.** Meßeinrichtung nach einem der Ansprüche 2 bis 28, bei der der zumindest eine Radarsensor (2) der Meßeinrichtung am Hebezeug (15) und die zumindest eine aktive Reflektoreinheit (3;24,25,26) am Lastaufnahmemittel (16) angeordnet ist.

**30.** Meßeinrichtung nach Anspruch 29, bei der ein Radarsensor (2) an einer Krankatze (23) eines Containerkrans (15) und drei aktive Reflektoreinheiten (24,25,26) an einem Spreader (16) des Containerkrans (15) angeordnet sind.

**31.** Meßeinrichtung nach Anspruch 30, bei der die drei aktiven Reflektoreinheiten (24,25,26) so am Spreader (16) des Containerkrans (15) angeordnet sind, daß sie einen möglichst großen Abstand zueinander aufweisen.

**32.** Meßeinrichtung nach Anspruch 30 oder 31, die zur Erfassung von Dreh- und/oder Kippbewegungen des Spreaders (16) bzw. eines am Spreader (16) aufgenommenen Containers (27) weitere aktive Reflektoreinheiten aufweist.

**33.** Meßeinrichtung nach einem der Ansprüche 3 bis 32, deren Radarsensor (2) zur Erzeugung des Radarsignals einen Signalgenerator aufweist.

**34.** Meßeinrichtung nach einem der Ansprüche 3 bis 33, deren Radarsensor (2) einen Richtkoppler (29) aufweist, mittels dem das erzeugte Radarsignal über die Antenne (6) in Richtung der aktiven Reflektoreinheiten (3;24,25,26) abstrahlbar ist.

**35.** Meßeinrichtung nach einem der Ansprüche 3 bis 34, deren Radarsensor (2) einen Mischer (13) aufweist, mittels dem die empfangenen reflektierten Radarsignale ins Basisband heruntermischbar sind.

**36.** Meßeinrichtung nach einem der Ansprüche 3 bis 35, deren Radarsensor (2) eine Filtereinrichtung aufweist, mittels der die Spektralanteile der empfangenen reflektierten Radarsignale selektier- und die Radarsignalanteile aller aktiven Reflektoreinheiten (3;24,25,26) trennbar sind.

**37.** Meßeinrichtung nach einem der Ansprüche 3 bis 36, deren Radarsensor (2) eine Filterbank aufweist, mittels der die Filterung der Radarsignale schaltungstechnisch durchführbar ist.

**38.** Meßeinrichtung nach einem der Ansprüche 3 bis 36, deren Radarsensor (2) einen A/D-Wandler (30) aufweist, mittels dem die empfangenen reflektierten Radarsignale in digitale Signale umwandelbar sind, so daß ihre Filterung digital im Prozessor (5) des Radarsensors (2) durchführbar ist.

**39.** Meßeinrichtung nach Anspruch 38, bei der die Filtereinrichtung (14) als Antialiasing-Tiefpaßfilter, vorzugsweise als Bandpaßfilter, ausgebildet ist, mittels dem die den aktiven Reflektoreinheiten (3;24,25,26) zuordnungsfähigen Radarsignalanteile durchlaß- und andere Radarsignalanteile unterdrückbar sind.

**40.** Verfahren zur Positionsbestimmung von Lastaufnahmemitteln (16) bei Hebezeugen (15), dadurch gekennzeichnet, daß als Meßgröße zur Positionsbestimmung des Lastaufnahmemittels (16) die Phasendifferenz bzw. die zeitliche Änderung der Phasendifferenz zwischen einem gesendeten und einem empfangenen Mikrowellen-, vorzugsweise Radarsignal, dient.

**41.** Verfahren nach Anspruch 40, bei dem ein Radarsensor (2) eine Messung bei zumindest zwei unterschiedlichen Radarfrequenzen durchführt und durch Auswerten der Phasendifferenzen zwischen dem gesendeten und dein empfangenen Radarsignal bei den unterschiedlichen Radarfrequenzen ein Maß für die Entfernung und/oder die Entfernungsänderung zwischen dem Radarsensor (2) und einer aktiven Reflektoreinheit (3) bildet.

**42.** Verfahren nach Anspruch 40 oder 41, bei dem die Distanzwerte zwischen dem bzw. allen Radarsensoren (2) einerund der bzw. allen aktiven Reflektoreinheiten(3;24,25,26) andererseits gleichzeitig bestimmt werden.

**43.** Verfahren nach einem der Ansprüche 40 bis 42, bei dem die Radarsensoren (2) nicht gleichzeitig auf derselben Radarfrequenz senden bzw. messen.

**44.** Verfahren nach einem der Ansprüche 40 bis 43, bei dem jede aktive Reflektoreinheit (3;24,25,26) das von ihr empfangene Radarsignal in einer für sie charakteristischen Weise moduliert und jeder Radarsensor (2) das derart modulierte und zu ihm reflektierte Radarsignal der betreffenden aktiven Reflektoreinheit (3;24,25,26) zuordnet.

**45.** Verfahren nach einem der Ansprüche 40 bis 44, bei dem jede aktive Reflektoreinheit (3;24,25,26) das von ihr empfangene Radarsignal in einer für sie charakteristischen Weise moduliert und die derart modulierten reflektierten Radarsignale unterschiedlicher aktiver Reflektoreinheiten (3;24,25, 26) im Radarsensor (2) getrennt werden.

**46.** Verfahren nach einem der Ansprüche 40 bis 45, bei dem das von einer aktiven Reflektoreinheit (3) empfangene Radarsignal moduliert und zu einem Radarsensor (2) reflektiert wird und das zum Radarsensor (2) reflektierte modulierte Radarsignal im Radarsensor (2) derart moduliert wird, daß in diesem Radarsignal enthaltene, sein als Grundlage der Entfernungsmessung dienendes Nutzsignal beeinträchtigende Störsignalanteile reduziert werden.

**47.** Verfahren nach einem der Ansprüche 44 bis 46, bei dem die Verstärkung eines Verstärkers (8) der aktiven Reflektoreinheit (3) wahrend der Reflexion des Radarsignals geändert wird.

**48.** Verfahren nach Anspruch 47, bei dem die Änderung der Verstärkung des Verstarkers (8) der aktiven Reflektoreinheit (3) in kleinen Stufen variiert wird.

**49.** Verfahren nach Anspruch 47 oder 48, bei dem die Änderung der Verstärkung des Verstärkers (8) der aktiven Reflektoreinheit (3) nach bestimmten pseudozufälligen Modulationssequenzen durchgeführt wird.

**50.** Verfahren nach Anspruch 49, bei dem als Modulationsfrequenzen Barker-Codes, Schieberegister (M) -Sequenzen, Golay-Codes, Gold-Codes oder Huffmann-Sequenzen verwendet werden.

**51.** Verfahren nach einem der Ansprüche 44 bis 46, bei dem der Verstärker (8) der aktiven Reflektoreinheit (3;24,25,26) während der Reflexion des Radarsignals alternierend an- und ausgeschaltet wird.

**52.** Verfahren nach Anspruch 51, bei dem der Verstärker (8) jeder aktiven Reflektoreinheit (3;24,25,26) mit einem für die betreffende aktive Reflektoreinheit (3;24,25,26) charakteristischen Takt ein- und ausgeschaltet wird.

**53.** Verfahren nach Anspruch 52, bei dem der für jede aktive Reflektoreinheit (3;24,25,26) charakteristische Takt so gewählt wird, daß sich die reflektierten Radarsignale im spektralen Nutzband spektral nicht überlagern.

**54.** Verfahren nach einem der Ansprüche 44 bis 53, bei dem das zu reflektierende Radarsignal von der aktiven Reflektoreinheit (3) verzögert wird.

**55.** Verfahren nach Anspruch 54, bei dem die Zeitverzögerung des zu reflektierenden Radarsignals mittels eines Oberflachenwellenelements (22) durchgeführt wird.

**56.** Verfahren nach Anspruch 54 oder 55, bei dem die Zeitverzögerung so groß gewählt wird, daß Störsignalanteile, beispielsweise verursacht durch Reflektionen an Gegenständen im Meßbereich, durch die Ausbreitungsdämpfung im Freiraum weitestgehend abklingen.

**57.** Verfahren nach einem der Ansprüche 54 bis 56, bei dem die Zeitverzögerung für jede aktive Reflektoreinheit (3;24, 25,26) unterschiedlich groß gewählt wird.

**58.** Verfahren nach einem der Ansprüche 47 bis 57, bei dem eine Amplitudenmodulation des Radarsignals mittels Verstellung bzw. Ein- und Ausschalten des Verstärkers (8) mit der Zeitverzögerung des Radarsignals kombiniert wird.

**59.** Verfahren nach Anspruch 58, bei dem die Modulationsfrequenz, z.B. 1 MHz, so gewählt wird, daß sie invers mit der Zeitverzögerung, z.B. 1 μs, eines Laufzeitglieds (20) verkoppelt ist.

**60.** Verfahren nach einem der Ansprüche 44 bis 59, bei dem radarsensorseitig die eingehenden Radarsignale mittels eines FMCW (frequency modulated continous wave)-Radar-Auswahlverfahrens getrennt und den jeweiligen aktiven Reflektoreinheiten (3;24,25,26) zugeordnet werden.

**61.** Verfahren nach einem der Ansprüche 44 bis 60, bei dem das zu reflektierende Radarsignal von der aktiven Reflektoreinheit (3) in seiner Frequenz versetzt wird.

**62.** Verfahren nach einem der Ansprüche 44 bis 61, bei dem das zu reflektierende Radarsignal von der aktiven Reflektoreinheit (3) in seiner Phase alternierend geändert wird.

**63.** Verfahren nach einem der Ansprüche 40 bis 62, bei dem zumindest zwei Meßwerte für unterschiedliche Übertragungswege bestimmt und diese Meßwerte in einem geometrischen Gleichungssystem kombiniert werden, um die räumliche Position des Lastaufnahmemittels (16) zu bestimmen.

**64.** Verfahren nach einem der Ansprüche 40 bis 63, bei dem Meßwerte von mehr unterschiedlichen Übertragungswegen als erforderlich bestimmt und in einem überbestimmten geometrischen Gleichungssystem kombiniert werden.

Fig.1

Fig.2

Fig. 3

Fig. 4

Fig. 5

Fig. 6

Fig. 7

16

Fig. 8